Europäisches Patentamt

(19) **European Patent Office**

**Office européen des brevets**

(11) Veröffentlichungsnummer: **0 173 017**
**B1**

(12) # EUROPÄISCHE PATENTSCHRIFT

(45) Veröffentlichungstag der Patentschrift:
**31.01.90**

(51) Int. Cl.⁴: **H 02 H 7/00**

(21) Anmeldenummer: **85107662.0**

(22) Anmeldetag: **21.06.85**

(54) Elektrische Installationsanlage mit Überspannungsschutz.

(30) Priorität: **27.08.84 DE 3431454**

(43) Veröffentlichungstag der Anmeldung:
**05.03.86 Patentblatt 86/10**

(45) Bekanntmachung des Hinweises auf die Patenterteilung:
**31.01.90 Patentblatt 90/5**

(84) Benannte Vertragsstaaten:
**AT CH DE LI**

(56) Entgegenhaltungen:
**EP-A- 0 046 545**
**EP-A- 0 110 070**
**DE-A- 3 029 453**
**DE-A- 3 223 392**
**GB-A- 2 010 613**
**US-A- 4 288 833**

(73) Patentinhaber: **Siemens Aktiengesellschaft,
Wittelsbacherplatz 2, D-8000 München 2 (DE)**

(72) Erfinder: **Solleder, Reinhard, Maxstrasse 6,
D-8411 Hainsacker (DE)**
Erfinder: **Stich, Karl-Heinz, Friedrich-Ebert-Strasse 10,
D-8400 Regensburg (DE)**

ACTORUM AG

**Beschreibung**

Die Erfindung bezieht sich auf eine elektrische Installationsanlage zur Speisung von Verbrauchern, insbesondere mit elektronischen Bauteilen, aus einem Netz, im einzelnen nach Gattungsbegriff des Patentanspruchs 1. Die Verbraucher sind durch Überspannungsableiter zu Erdpotential in einen Nebenzweig hinsichtlich der Verbraucher gegen Überspannung gesichert. Die Überspannungsableiter selbst sind durch eine Einrichtung gesichert und die Überspannungsableiter einer Gruppe sind erdseitig elektrisch verbunden und stehen durch eine Erdungsleitung mit Erde in Verbindung. Derartige Installationsanlagen sind bekannt (EP-AL-0 046 545). Zum Schutz der Verbraucher können neben den Überspannungsableitern zusätzlich auch übliche Fehlerstromschutzschalter eingesetzt werden, die Bedienungspersonen und die Anlage schützen.

Überspannungen, hervorgerufen durch Gewitter oder Schaltvorgänge, können elektrische Niederspannungsanlagen schädigen, indem sie Isolationen zerstören, gegebenenfalls vorhandene Fehlerstromschutzschalter zum unerwünschten Auslösen bringen oder indem sie elektronische Bauteile in Verbrauchergeräten schädigen. Solche Bauteile werden bereits durch die Auswirkung entfernter Blitzeinschläge beeinflußt oder zerstört.

Überspannungsableiter können Funkenstrecken bzw. Varistoren sein. Sie können selbst schadhaft werden und Dauerströme bis zu Kurzschlußströmen durchlassen. Wenn ein Überspannungsableiter schadhaft geworden ist, belastet er durch die Dauerströme die Installationsanlage und kann diese schädigen bzw. zu Brandgefahr führen. Es ist daher erforderlich, den Überspannungsableiter selbst bei Defekten zu sichern.

Bei der oben geschilderten bekannten Anlage (nach EP-AL-0 046 545) kann jedem Überspannungsableiter eine Schaltstrecke zugeordnet sein, die von einem thermischen und magnetischen Auslöser bei Überlast geöffnet werden kann. Eine derartige Schutzmaßnahme ist jedem Überspannungsableiter zugeordnet.

Es ist auch bekannt, Überspannungsableiter durch Fehlerstromschutzschalter zu sichern, indem die Fehlerstromschutzschalter nicht nur die Installationsanlage bzw. die Bedienungspersonen schützen, sondern auch zugleich bei defekten Überspannungsableitern abschalten. Hierzu ist in einem Hauptzweig zwischen Netz und Verbraucher ein Fehlerstromschutzschalter netzseitig vor Überspannungsableitern angeordnet, die in einem Nebenzweig gegen Erde ableiten (DE-PS 30 29 453). Die bekannte Geräteanordnung, die aus Fehlerstromschutzschalter und Überspannungsableitern besteht, weist einen Fehlerstromschutzschalter auf, der funktionell auf die Überspannungsableiter abgestimmt ist. Bei abzuleitenden Stoßströmen von mindestens 5 kA bei einem Stoßimpuls 8/20 µs löst er nicht aus. Außerdem löst er erst bei länger als 10 ms anstehenden Belastungen, bezogen auf 50 Hz Netzfrequenz, aus.

Unnötiges Auslösen eines Fehlerstromschutzschalters könnte nämlich sonst zu Unannehmlichkeiten oder auch zu Schäden führen, beispielsweise durch verdorbene Waren in Gefriergeräten. Bei einem schadhaft gewordenen Überspannungsableiter soll der vorgeschaltete Fehlerstromschutzschalter andererseits die Überspannungsableiter und die Verbraucher vom Netz abschalten.

Der Erfindung liegt die Erkenntnis zugrunde, daß es günstiger ist, den Fehlerstromschutz und den Überspannungsschutz eindeutig zu trennen, so daß die Installationsanlage bei defekten Überspannungsableitern weiterhin in Betrieb bleiben kann und gegebenenfalls unter dem Schutz von Fehlerstromschutzschaltern steht. Es sind dann keine Kompromisse bei der Empfindlichkeit des Fehlerstromschutzschalters einzugehen, um ihn ausreichend stoßstromfest zu entwickeln, so daß er bei Überspannungen, die von den Überspannungsableitern gegen Erde abgeleitet werden, nicht unerwünscht auslöst.

Überspannungsschutz wird bisher in der Regel hauptsächlich durch Einsatz von Überspannungsableitern im Netz der Energieversorgungsunternehmen zu lösen versucht. Verbraucher mit elektronischen Bauteilen können so jedoch nicht ausreichend geschützt werden.

Der Erfindung liegt die Aufgabe zugrunde, eine elektrische Installationsanlage der eingangs geschilderten Art zur Speisung von Verbrauchern zu entwickeln, die mit geringem Aufwand und mit weniger Bauteilen einen Schutz aller Überspannungsableiter bzw. der Installationsanlage gewährleistet.

Die Lösung der geschilderten Aufgabe erfolgt durch eine elektrische Installationsanlage nach Patentanspruch 1. Danach ist in die Erdungsleitung ein Fehlerspannungsauslöser an sich bekannter Art zwischengeschaltet, der mit einem Schaltschloß in Eingriffverbindung steht. Dieses steht zumindest mit einer Schaltstrecke im Erdungsleiter in Wirkverbindung, gegebenenfalls auch mit einer Schaltstrecke in einer Meldeleitung. Der Fehlerspannungsauslöser ist dabei so ausgebildet, daß er Stoßströme ohne auszulösen durchläßt und daß die Auslösung zeitverzögert erfolgt. Bei einer derartigen Installationsanlage ist man beim Einsatz von Überspannungsableitern von Fehlerstromschutzschaltern unabhängig und die Überspannungsableiter sind bei Defekten wirkungsvoll gesichert und sie lassen sich universell einsetzen.

Überspannungsableiter und gegebenenfalls einzusetzende Fehlerstromschutzschalter können dabei jeder für sich optimal für Verbraucher und Installationsanlagen ausgebildet bzw. ausgewählt werden. So kann ein Fehlerstromschutzschalter in gewünschter Weise enpfindlich sein und man kann sein Ansprechverhalten günstig wählen, da er Überströme nicht zu den Überspannungsableitern durchzulassen braucht. Die gegensätzlichen Anforderungen unter den Kriterien Stoßfestigkeit und Empfindlichkeit braucht man so nicht unter Preisgabe von anderen Vorteilen miteinander verträglich zu machen.

Der Nebenzweig mit den Überspannungsableitern kann grundsätzlich vor oder nach einem Zähler der Hausinstallation angeschlossen werden. Einen Fehlerstromschutzschalter können auch weitere Fehlerstromschutzschalter in den einzelnen Verbraucherzweigen nachgeordnet werden, wobei die üblichen Auswahlbedingungen unter dem Blickwinkel der Selektivität berücksichtigt werden können. Die Verbraucher kann man auch zusätzlich durch Leitungsschutzschalter oder Sicherungen in gewohnter Weise weiter schützen.

Bei der Installationsanlage nach der Erfindung eignen sich Überspannungsableiter, die im wesentlichen aus spannungsabhängigen Widerstandselementen bestehen. Sie können auch als Entladungsstreckeneinrichtung ausgebildet sein. Bei Überspannungsableitern, die als Entladungsstreckeneinrichtung ausgebildet sind, kann ein spannungsabhängiges Widerstandselement in Reihe geschaltet werden, um bei einem schadhaften Überspannungsableiter den Strom zu begrenzen und einen weiteren Schutz zu bieten. Die Einrichtung zur Sicherung der Überspannungsableiter kann dann in Anlehnung an die Erfahrungen bei stoßstromfesten Fehlerstromschutzschaltern, die zeitverzögert auslösen, noch unempfindlicher gehalten werden.

Einer Entladungsstreckeneinrichtung kann auch ein spannungsabhängiges Widerstandselement parallelgeschaltet werden, um eine Grob- und Feinabstimmung zu erzielen, indem der Überspannungsableiter grobe Überspannungen und Stromstöße ableitet und das parallel angeordnete spannungsabhängige Widerstandselement bei länger anstehenden geringeren Störungen anspricht.

Die Erfindung soll nun anhand von in der Zeichnung grob schematisch wiedergegebenen Ausführungsbeispielen näher erläutert werden.

In Fig. 1 ist eine Installationsanlage mit Überspannungsableitern und weiteren Schutzeinrichtungen veranschaulicht.

In Fig. 2 ist eine Schutzeinrichtung zum Sichern der netzseitig vorgeschalteten Überspannungsableiter bei Defekten zusammen mit den Überspannungsableitern wiedergegeben, also als Überspannungsschutzgerät ausgebildet.

In Fig. 3 ist veranschaulicht, wie das Überspannungsschutzgerät nach Fig. 2 hinter oder vor einem Hausinstallationszähler angeschlossen werden kann.

In Fig. 4 ist eine Einrichtung aus Überspannungsableitern dargestellt, die jeweils aus einer Entladungsstreckeneinrichtung und einem in Reihe geschalteten spannungsabhängigen Widerstandselement, z.B. einem Varistor, bestehen.

In Fig. 5 ist eine Einrichtung aus Überspannungsableitern wiedergegeben, bei der jeweils einer Entladungsstreckeneinrichtung ein spannungsabhängiges Widerstandselement parallelgeschaltet ist.

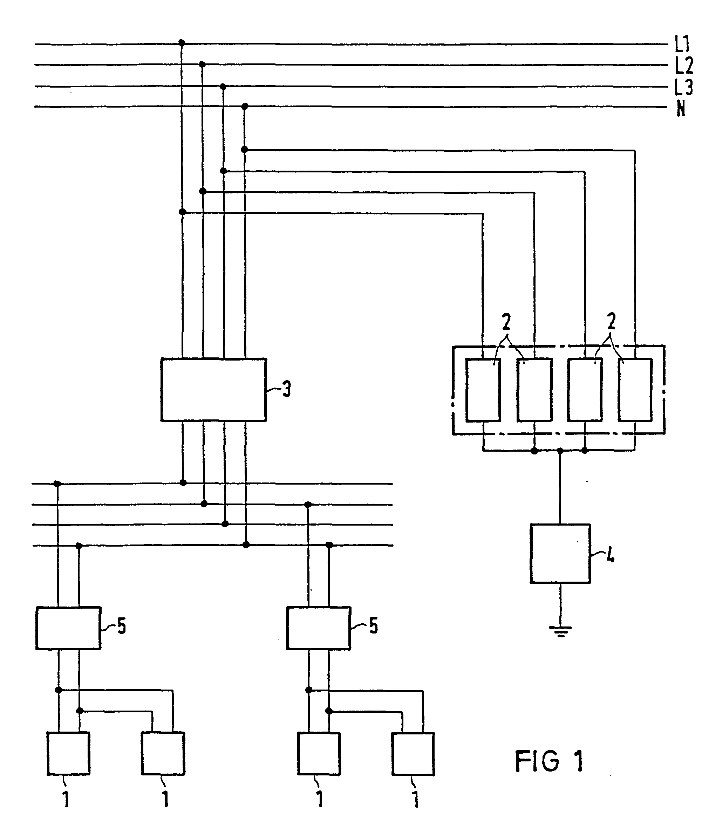

Die elektrische Installationsanlage nach Fig. 1 zur Speisung von Verbrauchern 1 aus einem Netz ist durch Überspannungsableiter 2 geschützt. Das Netz ist mit den Außenleitern L1, L2 und L3 sowie dem Neutralleiter N veranschaulicht. Die Verbraucher können durch Fehlerstromschutzschalter 3 geschützt sein. Überspannungsableiter 2 sind hinsichtlich Netz und Verbraucher in einem Nebenzweig angeordnet und leiten Überspannungen nach Erdpotential ab. Die Überspannungsableiter 2 sind dabei selbst durch eine Einrichtung 4 zur Sicherung der Überspannungsableiter bei Defekten gesichert. Fehlerstromschutzschalter 3 können überlicherweise weitere Fehlerstromschutzschalter 5 und/oder Leitungsschutzschalter nachgeschaltet sein.

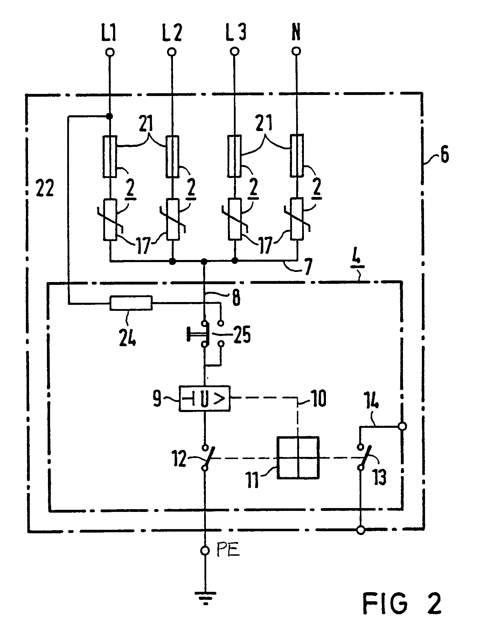

Die Einrichtung 4 zur Sicherung der Überspannungsableiter 2 kann nach Fig. 2 zu einem einheitlichen Gerät, einem Überspannungsschutzgerät 6 zusammengebaut sein. Die Überspannungsableiter 2 einer Gruppe, für die Außenleiter L1 bis L3 und den zugeordneten Neutralleiter N sind danach erdseitig elektrisch verbunden. Von der Verbindungsleitung 7 ist eine Erdungsleitung 8 durch einen zwischengeschalteten Fehlerspannungslöser 9 an Erde zu schließen. Der Fehlerspannungsauslöser 9 ist stoßstromfest und somit auch zeitverzögert ausgebildet. Er wirkt über eine Eingriffverbindung 10 auf ein Schaltschloß 11 ein, das zumindest mit einer Schaltstrecke 12 im Erdungsleiter 8 in Eingriffverbindung steht. Im Ausführungsbeispiel steht das Schaltschloß auch mit einer Schaltstrecke 13 in einer Meldeleitung 14 in Eingriffverbindung.

Die Überspannungsableiter 2 bestehen im Ausführungsbeispiel im wesentlichen aus spannungsabhängigen Widerstandselementen 17, denen als weiterer Kurzschlußschutz Schmelzleiter 21 in Reihe geschaltet sind.

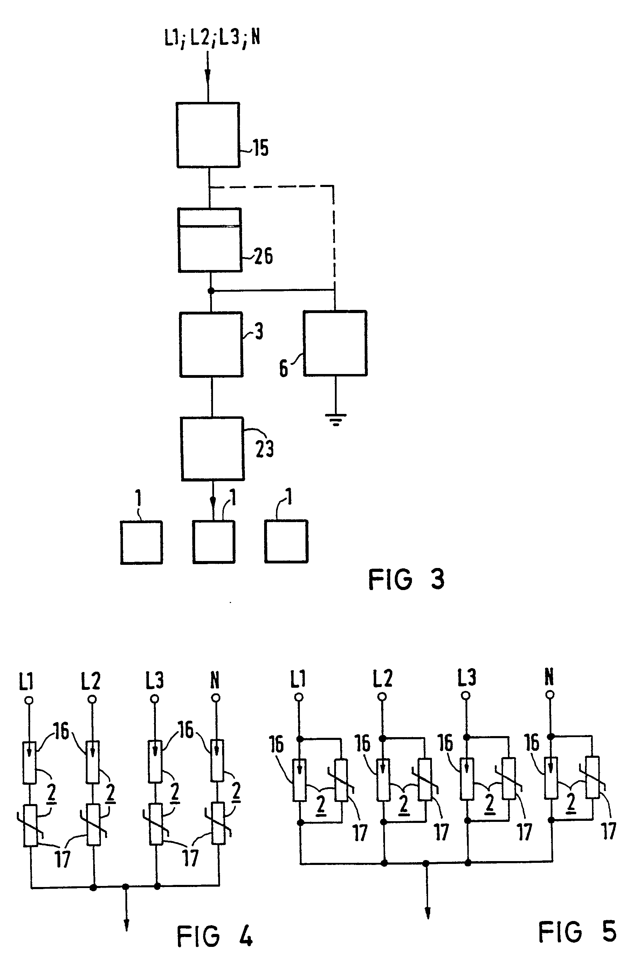

In der schematischen Darstellung nach Fig. 3 ist ein Hausanschluß 15, beispielsweise mit Hausanschlußsicherung veranschaulicht. Ihm ist nachgeschaltet ein Installationszähler 26 hinter dem oder vor dem – gestrichelte Linie – in einem Nebenzweig eine Überspannungsschutzeinrichtung angeschlossen ist. Fehlerstromschutzschalter 3 und Leitungsschutzschalter 23 sind vor den Verbrauchern 1 eingeschaltet.

Die Einrichtung aus Überspannungsableitern 2 besteht nach Fig. 4 aus Entladungsstreckeneinrichtungen 16 und spannungsabhängigen Widerstandselementen 17, bzw. Varistoren, in Reihenschaltung. Die Einrichtung aus Überspannungsableitern 2 nach Fig. 5 besteht aus Entladungsstrekken 16 und spannungsabhängigen Widerstandselementen 17 in Parallelschaltung.

Das Überspannungsschutzgerät 6 nach Fig. 2 weist eine Prüfeinrichtung auf. Sie besteht im wesentlichen aus einer Verbindungsleitung 22 von einem Außenleiter zum Erdungsleiter 8 vor dem Fehlerspannungsauslöser. In der Verbindungsleitung ist ein Begrenzungswiderstand 24 und eine Prüftaste 25 eingeschaltet.

Die Überspannungsschutzeinrichtung nach Fig. 2 arbeitet wie folgt:

Überspannungen, wie sie bei Gewittereinschlägen und Schaltvorgängen auftreten, werden von den Anschlußklemmen für die Außenleiter L1 bis L3 und für den Neutralleiter N zur Anschlußklem me PE für Erde abgeleitet. Der Fehlerspannungsauslöser 9 ist in an sich bekannter Weise so ausgebildet, daß er Stoßströme ohne auszulösen durchläßt und daß die Auslösung ohnehin erst zeitverzögert erfolgt.

Bei einem schadhaft gewordenen Überspannungsableiter 2 führt der mehr oder weniger starke Kurzschlußstrom zur Erde dazu, daß sich in der Fehlerspannungsspule über längere Zeit eine Spannung aufbaut, die in bei Fehlerspannungsauslösern üblicher Technik über die Eingriffsverbindung 10 auf das Schaltschloß 11 einwirkt und dieses entklinkt. Hierdurch wird die Schaltstrecke 12 und im Ausführungsbeispiel auch die Schaltstrecke 13 in der Meldeleitung 14 geöffnet. Die Überspannungsableiter 2 sind dadurch von Erde getrennt, so daß kein weiterer Dauerstrom fließen kann. Eine mit dieser Einrichtung versehene Installationsanlage arbeitet dann wie eine Anlage ohne Überspannungsschutz, jedoch ohne irgendwelche Störungen in der übrigen Anlage.

Wenn man die Prüfeinrichtung anhand der Prüftaste 25 in Betrieb setzt, wird bei einer intakten Überspannungsschutzeinrichtung über die Leitung 22 vom Außenleiter L1 an den Fehlerspannungsauslöser 9 Spannung gegen Erdpotential angelegt. Diese Spannung, die länger als die Verzögerungszeit ansteht, führt zum Ansprechen des Fehlerspannungsauslösers 9. Eine Bedienungsperson erkennt dann am Abschalten der Überspannungsschutzeinrichtung, daß die Anlage intakt ist. Nachdem sie wieder eingeschaltet ist, ist die Schutzeinrichtung betriebsbereit.

## Patentansprüche

1. Elektrische Installationsanlage zur Speisung von Verbrauchern (1), insbesondere mit elektronischen Bauteilen, aus einem Netz, die gegebenenfalls durch Fehlerstromschutzschalter (3) geschützt sind und die durch Überspannungsableiter (2) zu Erdpotential in einem Nebenzweig hinsichtlich der Verbraucher (1) gegen Überspannung gesichert sind, wobei die Überspannungsableiter (2) selbst durch eine Einrichtung (4) gesichert sind, und die Überspannungsableiter (2) einer Gruppe, für die Außenleiter (L1, L2, L3) und den zugeordneten Neutralleiter (N), erdseitig elektrisch verbunden sind und durch eine Erdungsleitung (8) mit Erde in Verbindung stehen, dadurch gekennzeichnet, daß in die Erdungsleitung (8) ein Fehlerspannungsauslöser (9) an sich bekannter Art zwischengeschaltet ist, der mit einem Schaltschloß (11) in Eingriffverbindung steht, das zumindest mit einer Schaltstrecke (12) im Erdungsleiter (8) in Wirkverbindung steht, gegebenenfalls auch mit einer Schaltstrecke (13) in einer Meldeleitung (14), wobei der Fehlerspannungsauslöser (9) so ausgebildet ist, daß er Stoßströme ohne auszulösen durchläßt und daß die Auslösung zeitverzögert erfolgt.

2. Installationsanlage nach Anspruch 1, dadurch gekennzeichnet, daß Überspannungsableiter (2) im wesentlichen aus spannungsabhängigen Widerstandselementen bestehen.

3. Installationsanlage nach Anspruch 1, dadurch gekennzeichnet, daß Überspannungsableiter (2) im wesentlichen aus einer Entladungsstreckeneinrichtung (16) bestehen.

4. Installationsanlage nach Anspruch 3, dadurch gekennzeichnet, daß der Entladungsstreckeneinrichtung (16) ein spannungsabhängiges Widerstandselement (17) in Reihe geschaltet ist.

5. Installationsanlage nach Anspruch 2, dadurch gekennzeichnet, daß dem spannungsabhängigen Widerstandselement eine Schmelzsicherung in Reihe geschaltet ist.

6. Installationsanlage nach Anspruch 3, dadurch gekennzeichnet, daß der Entladungsstreckeneinrichtung (16) ein spannungsabhängiges Widerstandselement (17) parallelgeschaltet ist.

## Claims

1. Electrical installation system for supplying consumers (1), in particular with electronic components, from a network, which, if the case arises, are protected by earth-leakage circuit breakers (3) and which are protected against overvoltage by surge arresters (2) to earth potential in a secondary branch in respect of the consumers (1), wherein the surge arresters (2) are themselves protected by an arrangement (4) and the surge arresters (2) of one group are connected electrically on the earth side for the outer conductors (L1, L2, L3) and the neutral conductors (N), associated therewith, and are connected to earth by an earth conductor (8), characterised in that a fault-voltage-operated-release (9) of a known type is inserted into the earth conductor (8), which release is actively connected to a breaker mechanism (11) which is operationally connected at least to a breaker gap (12) in the earth conductor (8), possibly also to a breaker gap (13) in an indicator circuit (14), wherein the fault-voltage-operated-release (9) is constructed in such a way that it allows impulse currents through without release and that the release occurs with time-delay.

2. Installation system according to claim 1, characterised in that surge arresters (2) consist substantially of voltage-dependent resistor elements.

3. Installation system according to claim 1, characterised in that the surge arresters (2) consist substantially of a discharge path arrangement (16).

4. Installation system according to claim 3, characterised in that a voltage-dependent resistor element (17) is connected in series to the discharge path arrangement (16).

5. Installation system according to claim 2, characterised in that a fusible cutout is connected in series to the voltage-dependent resistor element.

6. Installation system according to claim 3, characterised in that a voltage-dependent resistor element (17) is connected in parallel to the discharge path arrangement (16).

**Revendications**

1. Installation électrique servant à alimenter, à partir d'un réseau, des appareils d'utilisation (1), qui comportent, notamment, des composants électroniques, sont éventuellement protégés par des disjoncteurs de protection à courant de défaut (3) et sont protégés contre une surtension par l'intermédiaire de dispositifs (2) dérivant les surtensions en direction du potentiel de terre dans une branche de dérivation par rapport aux appareils d'utilisation (1), et dans laquelle les dispositifs (2) de dérivation des surtensions eux-mêmes sont protégés par und dispositif (4), et les dispositifs (2) de dérivation des surtensions d'un groupe, pour les conducteurs extérieurs (L1, L2, L3) et le conducteur neutre associé (N), sont reliés électriquement, du côté terre, et sont reliés à la terre par l'intermédiaire d'un conducteur (8) de mise à la terre, caractérisé par le fait que dans le conducteur (8) de mise à la terre est inséré, de façon connue en soi, un déclencheur à tension de défaut (9), qui est en prise avec un verrou de maintien (11) relié, selon une liaison active, à au moins une voie de coupure (12) présente dans le conducteur (8) de mise à la terre et éventuellement également à une voie de commutation (13) située dans une ligne de signalisation (14), le déclencheur à tension de défaut (9) étant agencé de manière à laisser passer des impulsions de courant, sans déclenchement, et que le déclenchement s'effectue avec retard.

2. Installation suivant la revendication 1, caractérisée par le fait que des dispositifs (2) de dérivation des surtensions sont constitués essentiellement par des éléments résistifs, qui sont fonction de la tension.

3. Installation suivant la revendication 1, caractérisée par le fait que des dispositifs (2) de dérivation des surtensions sont constitués essentiellement par un dispositif (16) comprenant une voie de décharge.

4. Installation suivant la revendication 3, caractérisée par le fait qu'un élément résistif (17), qui est fonction de la tension, est branché en série avec le dispositif (16) constituant une voie de décharge.

5. Installation suivant la revendication 2, caractérisée par le fait qu'un fusible est monté en série avec l'élément résistif qui est fonction de la tension.

6. Installation suivant la revendication 3, caractérisée par le fait qu'un élément résistif (17), qui est fonction de la tension, est monté en parallèle avec le dispositif (16) constituant une voie de décharge.

FIG 1

L1   L2   L3   N

FIG 2

L1; L2; L3; N

FIG 3

FIG 4

FIG 5